# EUROPEAN PATENT APPLICATION

(11) **EP 4 053 721 A1**
(43) Date of publication of application: **07.09.2022**
(21) Application number: 19951148.6
(22) Date of filing: 18.11.2019
(51) Int. Cl.: G06F 21/50, G06F 21/31, G06Q 50/10

(54) **DEVICE FOR PREVENTING AND BLOCKING POSTING OF HARMFUL CONTENT**

(30) Priority: 30.10.2019 KR 20190136651
(71) Applicant: Kim, Min Suk, Seogwipo-si, Jeju-do 63506 (KR)
(72) Inventor: Kim, Min Suk, Seogwipo-si, Jeju-do 63506 (KR)
(74) Representative: M. Zardi & Co S.A.
(86) International application number: PCT/KR2019/015746
(87) International publication number: WO 2021/085718

(57) **Abstract**

A device for preventing and blocking posting of harmful content according to an embodiment of the present invention comprising: a library server including a harmfulness determination unit having a plurality of harmfulness determination model files and an authentication key generating unit; a publisher terminal downloading one or more of the harmfulness determination model files and an authentication key from the harmfulness determination unit of the library server and performing inputting content, and a subscriber terminal subscribing to the content input by the publisher terminal, wherein if the content is satisfied with setting standards of the harmfulness determination model files downloaded from the library server and validity of the authentication key is verified, the content input by the publisher terminal is registered in the library server.

## Description

### FIELD OF THE INVENTION

The present invention relates to a device for preventing and blocking posting of harmful content, and more particularly, to a device capable of determining harmfulness of content and preventing or blocking posting and subscribing by using one or more harmfulness determination model files and authentication keys downloaded to a user's terminal.

### BACKGROUND OF THE INVENTION

In modern society, computers and the Internet are widely used for various purposes such as work, friendship, hobby, and information acquisition. The computers and the Internet have now become indispensable necessities for both individual and society, and a society is unimaginable without computers and the Internet. One of the reasons that computers and the Internet are widely used throughout society is that various and massive amounts of information can be conveniently and simply obtained through a computer connected to the Internet.

However, these characteristics of the Internet are also disadvantages in modern society. A typical problem of this is that protected persons who need protection such as children and adolescents may be indiscriminately exposed to harmful videos such as adult videos or illegal videos. For example, young children can access the Internet through a computer provided in each home or a LAN gaming center, so called PC room, and download numerous harmful video files through P2P website, blog, and various download websites. Therefore, although the dissemination of computers and the development of the Internet in modern society provides many conveniences to individuals and society, it also leaves a task to prevent young children from being exposed to harmful material.

Korean Patent Publication No. 2001-0093365 discloses a device for blocking input of harmful information of a website that provides or receives information through a network. The device is characterized to comprise steps of: receiving predetermined information from a plurality of Internet users connected through the network; determining whether the input information is harmful by comparing the input information with prestored information, and selectively performing either registration or blocking of the input information on the website according to the determination of harmfulness of the input information.

Korean Patent Publication No. 2002-0028593 is characterized to comprise steps of: inputting member information and accessing a management server by a computer user; inputting information for registration and transmission, by the computer user, on an information input screen displayed by the management server; determining, by a harmful word blocking module of the management server, whether a harmful word is included in the information input by the computer user, and blocking connection to the computer user or registering and transmitting the information according to a determination result of the harmful word blocking module.

### [Prior Art Document]

### [Patent Document]

Korean Patent Publication No. 2001-0093365
Korean Patent Publication No. 2002-0028593

### DETAILED DESCRITION OF THE INVENTION

### TECHNICAL PROBLEMS

One embodiment of the present invention provides a device for preventing and blocking posting of harmful content that can block the posting of harmful materials in advance by inspecting whether content, such as text, image, or video, that a user is posting is harmful, by using artificial intelligence, when the user posts new information on an online bulletin board.

Another embodiment of the present invention provides a device for preventing and blocking posting of harmful content that can inspect harmfulness of content in real time based on a harmful URL, harmful content, or a harmful keyword stored in a user's terminal and can purify or block content determined to be harmful.

Another embodiment of the present invention provides a device for preventing and blocking posting of harmful content that classifies a plurality of harmfulness determination model files for each category for which harmfulness is to be determined and manages them to inspect only certain categories requested by the user, thereby reducing inspection time for unnecessary categories.

### SUMMARY OF THE INVENTION

According to an embodiment of the present invention, a device for preventing and blocking posting of harmful content, the device comprising: a library server including a harmfulness determination unit having a plurality of harmfulness determination model files and an authentication key generating unit; a publisher terminal downloading one or more of the harmfulness determination model files and an authentication key from the harmfulness determination unit of the library server and performing inputting content, and a subscriber terminal subscribing to the content input by the publisher terminal, wherein if the content is satisfied with setting standards of the harmfulness determination model files downloaded from the library server and validity of the authentication key is verified, the content input by the publisher terminal is registered in the library server.

The publisher terminal may include: a content input unit receiving content from a user of the publisher terminal; a harmfulness determination unit storing the harmfulness determination model file and an administrator standard model file downloaded from the library server and determining whether the content input to the content input unit is harmful, and a content output unit requesting registration of the input content if the harmfulness determination unit determines that the input content has no harmfulness.

If the harmfulness determination unit determines that the input content has harmfulness, a notification recommending correction and rewriting of the input content may be transmitted.

The plurality of harmfulness determination model files may be divided into various categories such as adult, violence, gambling, horror, disliked animals, or disgust, and any one harmfulness determination model file selected by a user among the harmfulness determination model files may be set as a basic model.

The authentication key generated by the authentication key generating unit may include information such as version, size, and creation date of the plurality of harmfulness determination model files, and by matching the authentication key with the harmfulness determination model file, it may be verified whether an inspection based on each harmfulness determination model file is performed.

The subscriber terminal may include: a content storage unit storing content received from the library server; a harmfulness determination unit storing the harmfulness determination model file and the administrator standard model file received from the library server and determining whether the content stored in the content storage unit is harmful, and a content output unit outputting content that is satisfied with a harmfulness determination standard among the content stored in the content storage unit.

The content output unit replaces text, image, or video of content that is determined to be not satisfied with the harmfulness determination standard in the harmfulness determination unit of the subscriber terminal with other text, image, or video and outputs the replaced text, image, or video.

If content that has already been stored and has not been performed harmfulness determination, the content may be determined whether it has harmfulness in real time before being output to the screen of the subscriber terminal. In addition, if the content meets a harmfulness determination standard, authentication for the content may be stored through the authentication key, and if the content does not meet the harmfulness determination standard, an inspection result of the corresponding content may be transmitted to the library server to request a user and an administrator who posted the corresponding content to modify and delete the corresponding content.

### TECHNICAL EFFECTS OF THE INVENTION

The disclosed technology may have the following effects. However, it does not mean that a specific embodiment should include all of the following effects or only the following effects, and the scope of the disclosed technology should not be understood as being limited thereby.

One embodiment of the present invention relates to a device for preventing and blocking posting of harmful content and can provide a technology that can block the posting of harmful materials in advance by inspecting whether content, such as text, image, or video, that a user is posting is harmful, by using artificial intelligence, when the user posts new information on an online bulletin board.

Another embodiment of the present invention relates to a device for preventing and blocking posting of harmful content and can provide a technology a device for preventing and blocking posting of harmful content that can inspect harmfulness of content in real time based on a harmful URL, harmful content, or a harmful keyword stored in a user's terminal and can purify or block content determined to be harmful.

Another embodiment of the present invention relates to a device for preventing and blocking posting of harmful content and can provide a technology that classifies a plurality of harmfulness determination model files for each category for which harmfulness is to be determined and manages them to inspect only certain categories requested by the user, thereby reducing inspection time for unnecessary categories.

### BRIEF DESCRIPTION OF THE DRAWINGS

FIG. 1 is a block diagram schematically illustrating a device for preventing and blocking posting of harmful content according to an embodiment of the present invention.
FIG. 2 is a block diagram illustrating a basic configuration of a device for preventing and blocking posting of harmful content according to an embodiment of the present invention.
FIG. 3 is a block diagram illustrating a configuration of a publisher terminal of a device for preventing and blocking posting of harmful content according to an embodiment of the present invention.
FIG. 4 is a block diagram illustrating a configuration of a library server of a device for preventing and blocking posting of harmful content according to an embodiment of the present invention.
FIG. 5 is a block diagram illustrating a configuration of a harmfulness determination unit in a library server of a device for preventing and blocking posting of harmful content according to an embodiment of the present invention.
FIG. 6 is a block diagram illustrating a configuration of a subscriber terminal of a device for preventing and blocking posting of harmful content according to an embodiment of the present invention.
FIGs. 7 to 9 are flowcharts illustrating an operation process of a device for preventing and blocking posting of harmful content according to an embodiment of the present invention.

### BEST MODE FOR THE INVENTION

Since description of the present invention is merely an embodiment for structural or functional explanation, the scope of the present invention should not be interpreted as being limited by the embodiment described in the description below. That is, since the embodiment can be variously modified and may have various forms, it should be understood that the scope of the present invention includes equivalents that can embody the technical idea of the present invention. In addition, since the object or effect presented in the present invention does not mean that a specific embodiment should include all of them or only such effects, it should not be understood that the scope of the present invention is limited thereby.

Meanwhile, meaning of terms described in the present application should be understood as follows.

Terms such as "first" and "second" are for distinguishing one component from another, and the scope of the present invention should not be limited by these terms. For example, a first component may be termed a second component, and similarly, a second component may also be termed a first component.

When a component is referred to as "connected" to another component, it may be directly connected to the other component, but it should be understood that another component may exist therebetween. On the other hand, when it is mentioned that a certain component is "directly connected" to another component, it should be understood that another element does not exist therebetween. Meanwhile, other descriptions describing relationship between components, such as "between" and "directly between," " adjacent to" and "directly adjacent to," and the like, should be interpreted similarly.

The singular form should be understood as including the plural form unless clearly stated otherwise. In addition, terms such as "comprise" or "have" are intended to indicate an existence of embodied feature, number, step, operation, component, part, or a combination thereof, and it should be understood that it does not preclude a possibility of existence or addition of one or more other features, numbers, steps, operations, components, parts, or combinations thereof.

In each step, reference numbers, such as a, b, c, and the like, are used for convenience of description. The reference numbers do not describe an order of each step, and each step may occur in a different order from the specified order unless a specific other order is clearly specified. That is, each step may occur in the same order as specified, may be performed substantially simultaneously, or may be performed in a reverse order.

All terms used herein have the same meaning as commonly understood by one of ordinary skill in the art to which the present invention belongs unless otherwise defined. Terms defined in the dictionary should be interpreted as being consistent with meaning of context of related arts and cannot be interpreted as having an ideal or excessively formal meaning unless explicitly defined in the present application.

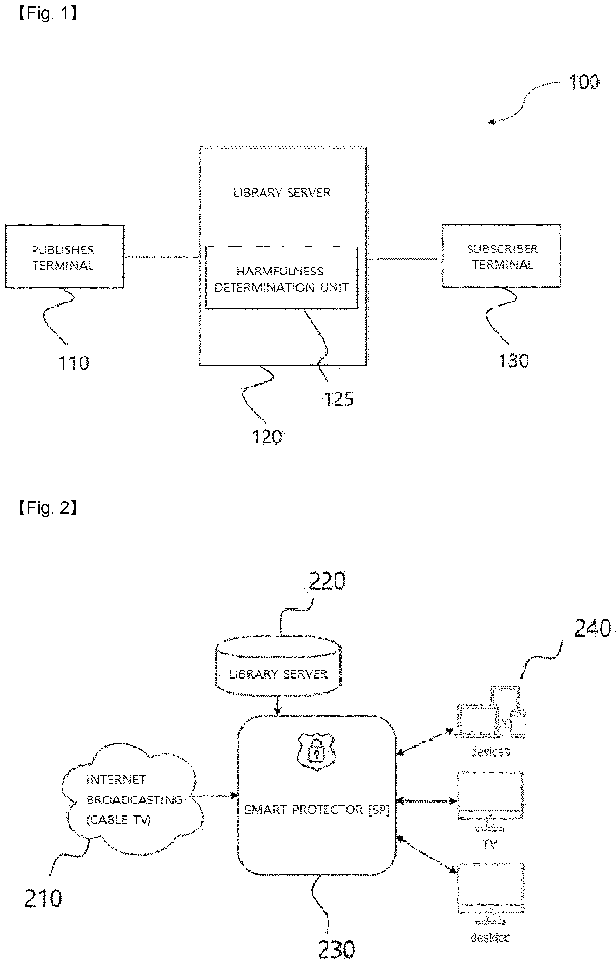

FIG. 1 is a block diagram schematically illustrating a device for preventing and blocking posting of harmful content according to an embodiment of the present invention.

Referring to FIG. 1, device 100 for preventing and blocking posting of harmful content includes a publisher terminal 110, a library server 120, and a subscriber terminal 130.

First, the publisher terminal 110 is a terminal uploading content such as a new text, image, or video to an online bulletin board. The subscriber terminal 130 is a terminal subscribing to various contents input from the publisher terminal 110.

The library server 120 includes a harmfulness determination unit 125, which verifies validity of the authentication key and then determines whether the corresponding content is harmful along with the authentication key, when the library server 120 receives a request for input of new content from the publisher terminal 110. The harmfulness determination unit 125 has a plurality of harmfulness determination model files. The harmfulness determination unit 125 transmits a plurality of harmfulness determination model files to the publisher terminal 110 and the subscriber terminal 130 to determine whether an input content of the publisher terminal 110 and an output content of the subscriber terminal 130 are harmful in real time.

FIG. 2 is a block diagram illustrating a basic configuration of a device for preventing and blocking posting of harmful content according to an embodiment of the present invention.

Referring to FIG. 2, content 210 such as the Internet, broadcasting, and cable TV is input to a smart protector 230, and the smart protector 230 determines whether the content, which is input through a harmfulness determination program received from the library server 220, is harmful. As a result of determining whether the content is harmful, only the content determined to be not harmful is output through the plurality of terminals 240.

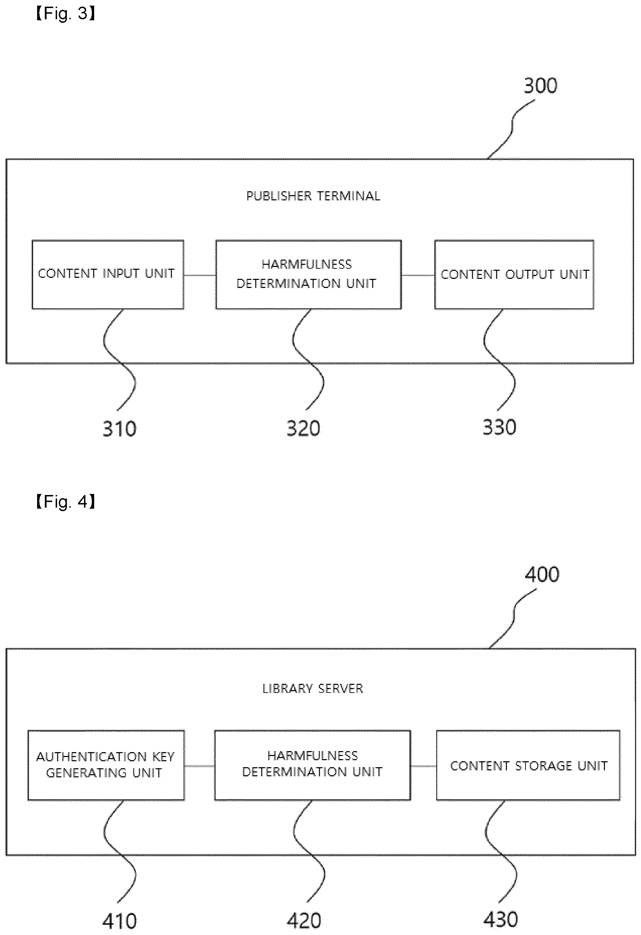

FIG. 3 is a block diagram illustrating a configuration of a publisher terminal of a device for preventing and blocking posting of harmful content according to an embodiment of the present invention.

Referring to FIG. 3, the publisher terminal 300 includes a content input unit 310 inputting content to be published, a harmfulness determination unit 320, and a content output unit 330.

The content input unit 310 receives the content through a user of the publisher terminal 300. When the user enables an input function for inputting the content, an editor is opened to input the content. The user may input the content through this editor.

The harmful determination unit 320 stores the harmful determination program downloaded from the library server, '120' in FIG. 1. The harmfulness determination program can be made in various forms, such as plugin, extension, class, and independent program that include an artificial intelligence function. The harmfulness determination unit 320 has one or more harmfulness determination model files. When the user of the publisher terminal 300 activates the content input function, a harmfulness determination model and an administrator standard model of the library server, '120' in FIG. 1, are stored in the harmfulness determination unit 320 at the same time. In addition, an authentication key for verifying whether the content is registered and whether the content is harmful, is also downloaded together and stored in the harmfulness determination unit 320.

When input of the content is completed from the user of the publisher terminal 300, the harmfulness determination unit 320 determines whether the content is harmful. For example, if there is a forbidden text, image, or video in the content, the harmfulness determination unit 320 automatically recommends a user to correct the content. In addition, if the content includes pornography, violence or disgust image and is against a policy of website management, words of guidance is notified that posting of the selected image content is prohibited.

If the content is determined to have no harmfulness from the harmfulness determination unit 320, the content output unit 330 requests a registration of the content input to the library server '120' in FIG. 1.

FIG. 4 is a block diagram illustrating a configuration of a library server of a device for preventing and blocking posting of harmful content according to an embodiment of the present invention.

Referring to FIG. 4, the library server 400 includes an authentication key generating unit 410, a harmfulness determination unit 420, and a content storage unit 430.

First, when the authentication key generating unit 410 receives a request of posting new content from the publisher terminal '110' in FIG. 1, the authentication key generating unit 410 generates an authentication key and transmits it to the publisher terminal '110' in FIG. 1. The authentication key transmitted to the publisher terminal is set to be valid for 24 hours by default but is not limited thereto. The valid time of the authentication key may be adjusted in some cases. The authentication key transmitted to the publisher terminal is deleted when a new content is registered from the publisher terminal. The authentication key generated by the authentication key generating unit 410 has information of harmfulness determination model files, such as version, size, or creation date of the file, to prevent hacking and model files deformation. when the publisher terminal first accesses to the library server 400, or the authentication key or the model file is damaged, new authentication key is downloaded.

When the harmfulness determination unit 420 receives a request for content registration from the publisher terminal, the harmfulness determination unit 420 verifies validity of the authentication key and reverifies whether the content to be registered along with the authentication key is determined to be not harmful.

The content storage unit 430 stores new content of which validity of the authentication key has been verified and which has passed the harmfulness determination standard.

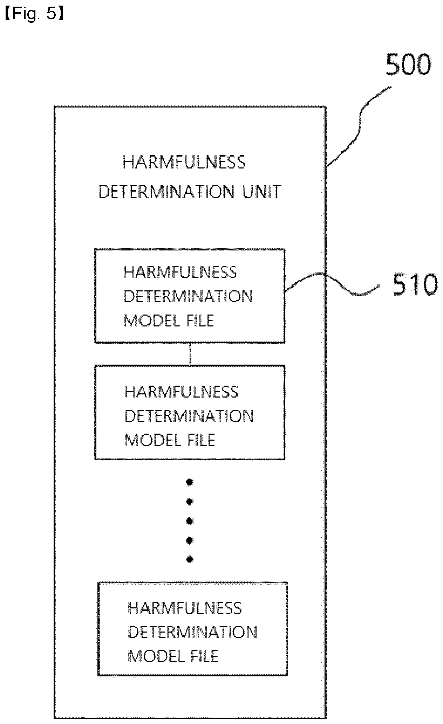

FIG. 5 is a block diagram illustrating a configuration of a harmfulness determination unit in a library server of a device for preventing and blocking posting of harmful content according to an embodiment of the present invention.

Referring to FIG. 5, the harmful determination unit 500 of the library server '120' in FIG. 1 has a plurality of harmful determination model files 510. The plurality of harmful determination model files 510 are provided to be distinguished by category. For example, the plurality of harmful determination model files 510 may be divided into categories such as adults, violence, gambling, horror, personally disliked animals, and disgust. Since the plurality of harmful determination model files 510 can be respectively downloaded, download time can be reduced. In addition, it is not necessary to determine harmfulness of content by unnecessary category according to individual settings, inspection time of content input from the publisher terminal '110' in FIG. 1 can be reduced.

In addition, in the library server '120' in FIG. 1, any one harmfulness determination model file 510 selected from among the plurality of harmfulness determination model files 510 is set as a basic model, and the harmfulness determination model file 510 set as the basic model can be used to proceed an inspection without separately downloading it. In addition, the harmfulness determination model file 510 set as the basic model can be used to proceed an inspection in both an offline state and an online state.

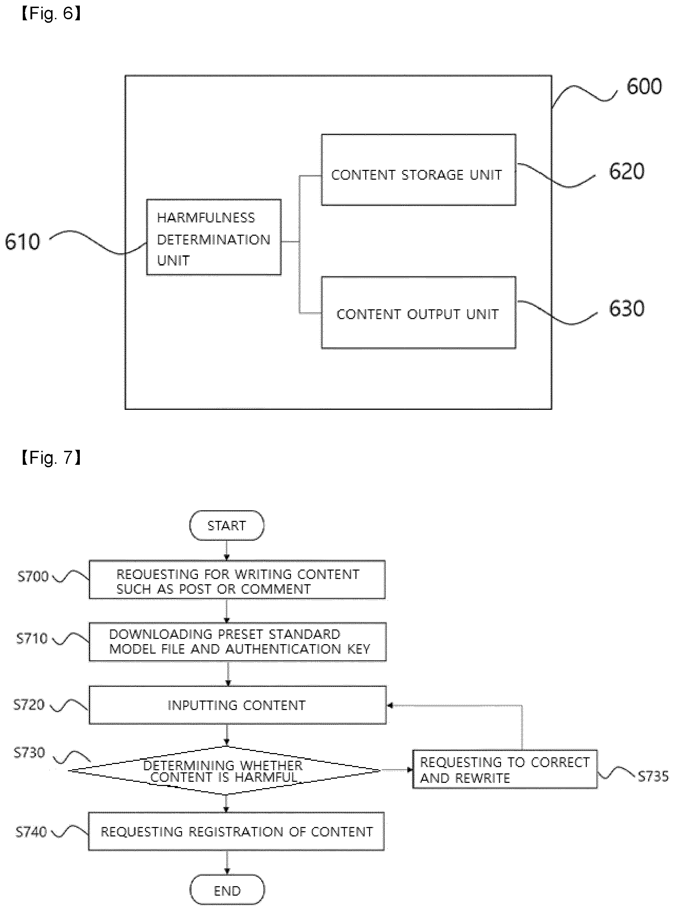

FIG. 6 is a block diagram illustrating a configuration of a subscriber terminal of a device for preventing and blocking posting of harmful content according to an embodiment of the present invention.

Referring to FIG. 6, the subscriber terminal 600 includes a harmfulness determination unit 610, a content storage unit 620, and a content output unit 630.

The harmful determination unit 610 stores the harmful determination program downloaded from the library server, '120' in FIG. 1. The harmfulness determination program can be made in various forms, such as plugin, extension, class, and independent program that include an artificial intelligence function. In addition, an authentication key for verifying whether the content is registered and whether the content is harmful, is also downloaded together and stored in the harmfulness determination unit 610.

The content storage unit 620 stores content downloaded from the library server '120' in FIG. 1. The content storage unit 620 may include both content that is satisfied with harmfulness standard of the library server and content that is not satisfied with the harmfulness standard. The content that is not satisfied with the standard is once again determined whether the content is harmful through the harmfulness determination unit 610, and if the content is satisfied with the harmfulness determination standard, the content is stored as content that passes the harmful determination standard through an authentication key.

The content output unit 630 outputs content that is satisfied with the harmful determination standard among the content stored in the content storage unit 620 to allow a subscriber to check the content. If the content is not satisfied with the harmful determination standard even after redetermining, the content of text, image, or video may be modified to content of other text, image or video, and the modified content may be output. For example, the content may be displayed through a process such as changing a prohibited term to a purified term, blurring a harmful image, or the like.

FIGs. 7 to 9 are flowcharts illustrating an operation process of a device for preventing and blocking posting of harmful content according to an embodiment of the present invention.

Referring to FIG. 7, a content input process of the publisher terminal '110' in FIG. 1 is illustrated.

First, the publisher terminal requests for writing content such as post or comment S700.

When the library server '120' in FIG. 1 receives a request for writing content from the publisher terminal, a harmful determination program is downloaded to the publisher terminal through the library server'120' in FIG. 1. In addition, preset standard model files such as the harmfulness determination model files and the standard model files of the post administrator are downloaded. The authentication key for registration and verification of a post is transmitted S710. In this case, download time can be reduced by downloading only a desired category among the plurality of harmfulness determination model files subdivided for each category.

Thereafter, the user of the publisher terminal inputs content such as text, image, or video S720.

Then, the publisher terminal determines whether the input content is satisfied with the harmfulness determination standard and a website administrator's standard S730. At this time, an unnecessary category, which is not selected by each individual setting or by an administrator setting, does not have to be determined harmfulness, thereby reducing inspection time of the input content. In this case, if the input content is not satisfied with the harmfulness standard, it is recommended to modify or rewrite the input content S735.

If the input content is satisfied with the standard for harmfulness determination, the publisher terminal requests registration of the input content S740. The content requested for registration is transmitted to the library server. After verifying whether the content requested for registration is harmful and validity of the authentication key, the content is registered.

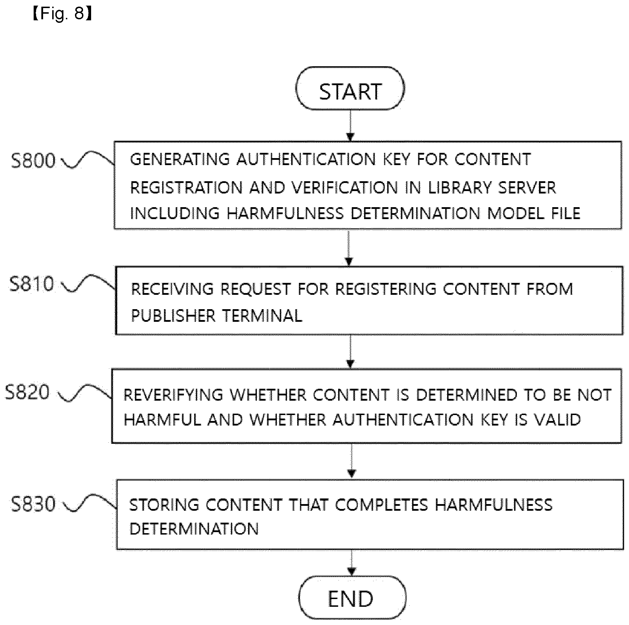

Referring to FIG. 8, FIG. 8 is a flowchart illustrating an operation process of the library server '120' in FIG. 1.

The library server '120' in FIG. 1 comprises one or more harmfulness determination model files that are equivalent to the harmfulness determination standard and the post administrator standard and generates the authentication key for content registration and verification S800.

Then, the library server'120' in FIG. 1 receives a request for registering content from the publisher terminal S810.

At this time, the content requested to register is content that has been already determined whether it is harmful based on the harmfulness determination model files downloaded to the publisher terminal.

The library server '120' in FIG. 1 reverifies whether the content input from the publisher terminal is determined to be not harmful and whether the authentication key is valid S820.

The verified content is stored in the storage unit of the library server S830. The storage unit stores new content that is satisfied with the harmfulness standard and existing content that is not satisfied with the standard.

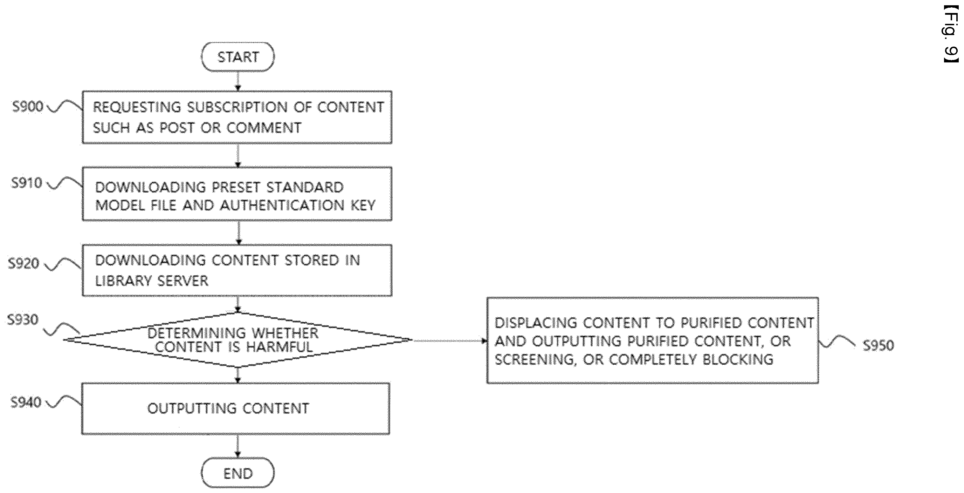

Referring to FIG. 9, FIG. 9 is a flowchart illustrating a subscription process of the subscriber terminal.

A user of the subscriber terminal '130' in FIG. 1 requests subscription of content such as online post or comment S900.

When the content subscription begins, the harmful determination model files, which are satisfied with the harmful determination standard of the library server '120' in FIG. 1 and the post administrator standard, and the authentication key for content registration and verification are downloaded S910.

Then, the content stored in the library server is downloaded to the subscriber terminal and stored in the content storage unit S920. At this time, the storage unit stores new content that is satisfied with the harmfulness standard and existing content that is not satisfied with the standard. The subscriber terminals determines whether the stored content is satisfied with the harmfulness determination standard and the post administrator standard S930. At this time, an unnecessary category, which is not selected by each individual setting, does not have to be determined harmfulness, thereby reducing inspection time of the input content.

If the content is satisfied with the harmful determination standard and the post administrator standard, the content is output to a subscriber, a user of the terminal S940. In this case, even if the content has passed the harmfulness determination standard, if a version of the harmfulness determination model file which was used in an inspection of the content, is old, the content may be reinspected with a newly applied harmfulness determination model file.

Meanwhile, in case of the content without harmfulness determination, the harmfulness determination is conducted in real time before outputting the content on a screen of the subscriber terminal and simultaneously with loading. Afterwards, if the content is satisfied with the standard, authentication of the content is stored through the authentication key. If the content does not pass the standard in the real-time harmfulness determination inspection, the inspection result of the corresponding content is transmitted to the library server to inform that the content is not satisfied with the harmfulness determination standard, and notice of modification and deletion of the content is transmitted to the user who posted the content and the administrator. In addition, a part of the content that does not meet the standard is replaced with purified content and displayed as the purified content, or is screened or completely blocked S950.

As described above, the present invention can have a dual blocking effect of the harmful content through the publisher terminal and subscriber terminal and can block the harmful content in real time. In addition, other content that has already been posted can also be blocked in real time through harmful determination.

In addition, by classifying and applying the harmfulness determination standard into various categories and enabling to apply the standard according to individual preferences, the classified categories can be used individually or integrally.

Furthermore, since the user's device, such as a local machine and a device, determines whether the content is harmful, reports it in real time, and blocks the harmful material, human and material cost, such as system operation management expense, communication line expense, and labor expense, are reduced.

Moreover, since registration of the content input through the publisher terminal can be blocked in advance, time and cost for finding and deleting the harmful content distributed after registration are reduced.

In addition, since content that has been already registered before applying harmfulness determination can be reinspected in real time before being output on the subscriber terminal, the harmful content can be blocked before being exposed to numerous subscribers.

Although the above has been described with reference to the preferred embodiments of the present invention, one of skilled in the art can variously modify and change the present invention within the scope without departing from the spirit and scope of the present invention as described in the claims below.

**[Description of Reference Number]**

| | | | |
|---|---|---|---|
| 100: | device for preventing and blocking posting of harmful content | | |
| 120, 220, 400: | library server | | |
| 125, 320, 420, 500, 610: | harmfulness determination unit | | |
| 130: | subscriber terminal | 210: | content |
| 230: | smart Protector | 240: | terminal |
| 310: | content input unit | 330, 630: | content output unit |
| 410: | authentication key generating unit | 430, 620: | content storage unit |
| 510: | harmfulness determination model file | | |

## Claims

1. A device for preventing and blocking posting of harmful content, the device comprising:
a library server including a harmfulness determination unit having a plurality of harmfulness determination model files and an authentication key generating unit;
a publisher terminal downloading one or more of the harmfulness determination model files and an authentication key from the harmfulness determination unit of the library server and performing inputting content, and
a subscriber terminal subscribing to the content input by the publisher terminal,
wherein if the content is satisfied with setting standards of the harmfulness determination model files downloaded from the library server, and validity of the authentication key is verified, the content input by the publisher terminal is registered in the library server.

2. The device of claim 1, wherein the publisher terminal includes:
a content input unit receiving the content from a user of the publisher terminal;
a harmfulness determination unit storing the harmfulness determination model file and an administrator standard model file downloaded from the library server and determining whether the content input to the content input unit is harmful, and
a content output unit requesting registration of the input content if the harmfulness determination unit determines that the input content has no harmfulness.

3. The device of claim 2, wherein if the harmfulness determination unit determines that the input content has harmfulness, a notification recommending correction and rewriting of the input content is transmitted.

4. The device of claim 1, wherein the plurality of harmfulness determination model files is divided into various categories such as adult, violence, gambling, horror, disliked animals, or disgust, and any one harmfulness determination model file selected by a user among the harmfulness determination model files is set as a basic model.

5. The device of claim 1, wherein the authentication key generated by the authentication key generating unit includes information of the plurality of harmfulness determination model files, such as version, size, and creation date of the files,
wherein by matching the authentication key with the harmfulness determination model file, it is verified whether an inspection based on each harmfulness determination model file is performed.

6. The device of claim 1, wherein the subscriber terminal includes:
a content storage unit storing content received from the library server;
a harmfulness determination unit storing the harmfulness determination model file and the administrator standard model file received from the library server and determining whether the content stored in the content storage unit is harmful, and
a content output unit outputting content that is satisfied with harmfulness determination standard among the content stored in the content storage unit.

7. The device of claim 6, wherein the content output unit replaces text, image, or video of content that is determined to be not satisfied with the harmfulness determination standard in the harmfulness determination unit of the subscriber terminal with other text, image, or video and outputs the replaced text, image, or video.

8. The device of claim 1, wherein if content that has already been stored and has not been performed harmfulness determination, the content is determined whether it has harmfulness in real time before being output to a screen of the subscriber terminal,
wherein if the content is satisfied with a harmfulness determination standard, authentication for the content is stored through the authentication key, and if the content is not satisfied with the harmfulness determination standard, an inspection result of the corresponding content is transmitted to the library server to request a user who posted the corresponding content and an administrator to modify and delete the corresponding content.
